# EUROPEAN PATENT APPLICATION

(11) **EP 4 757 203 A1**
(43) Date of publication of application: **10.06.2026**
(21) Application number: 25221895.3
(22) Date of filing: 09.12.2025
(51) Int. Cl.: H04B 7/185, H04L 51/00

(54) **APPARATUS AND METHOD FOR INTERNET OF THINGS NON TERRESTRIAL NETWORK SUPPORTING STORE AND FORWARD**

(30) Priority: 09.12.2024 KR 20240181349; 08.12.2025 KR 20250193225
(71) Applicant: Thinkware Corporation, Seongnam-si, Gyeonggi-do 13493 (KR)
(72) Inventor: HAN, Taekyu, 13493 Seongnam-si, Gyeonggi-do (KR); LIM, Donghee, 13493 Seongnam-si, Gyeonggi-do (KR); KIM, Daewon, 13493 Seongnam-si, Gyeonggi-do (KR)
(74) Representative: BCKIP Part mbB

(57) **Abstract**

In embodiments of the present disclosure, a device of a satellite for providing a non-terrestrial network (NTN) access is provided. The device includes memory comprising instructions, at least one processor, and at least one transceiver. The instructions, when executed by the at least one processor, cause the device to transmit, to a user equipment (UE), a message including information regarding a store and forward (S&F) mode, and perform communication with the UE based on the message. The message includes at least one of information indicating whether a real-time (RT) mode is momentarily supported, indication information for indicating whether an operation mode of a cell is the RT mode or the S&F mode, information on a maximum delivery time for the S&F mode, ephemeris information of the satellite, or footprint information provided by the satellite.

## Description

### [Technical Field]

The present disclosure relates generally to a non-terrestrial network (NTN) that provides a wireless communication service through a satellite located in an Earth orbit, rather than a ground base station, or through an aerial vehicle that flies at a high altitude. More specifically, it relates to an apparatus and a method for Internet of Things (IoT) non-terrestrial networks (NTN).

### [Background Art]

To complement a terrestrial network that provides a wireless communication system, a non-terrestrial network (NTN) has been introduced. The non-terrestrial network may provide a communication service even in a region where it is difficult to establish the terrestrial network or in a disaster situation. In addition, due to a decrease in a satellite launch cost in recent years, an access network environment may be efficiently provided.

### [Disclosure]

### [Technical Solution]

In embodiments of the present disclosure, a device of a satellite for providing a non-terrestrial network (NTN) access is provided. The device may comprise memory comprising instructions, at least one processor, and at least one transceiver. The instructions, when executed by the at least one processor, may cause the device to transmit, to a user equipment (UE), a message including information regarding a store and forward (S&F) mode, and perform communication with the UE based on the message. The message may include at least one of information indicating whether a real-time (RT) mode is momentarily supported, indication information for indicating whether an operation mode of a cell is the RT mode or the S&F mode, information on a maximum delivery time for the S&F mode, ephemeris information of the satellite, or footprint information provided by the satellite.

In embodiments of the present disclosure, a user equipment (UE) for performing a non-terrestrial network (NTN) access is provided. The UE may comprise memory comprising instructions, at least one processor, and at least one transceiver. The instructions, when executed by the at least one processor, may cause the UE to receive, from a satellite configured to perform functions of an evolved node B (eNB), a message including information regarding a store and forward (S&F) mode, and perform communication with the satellite based on the message. The message may include at least one of information indicating whether a real-time (RT) mode is momentarily supported, indication information for indicating whether an operation mode of a cell is the RT mode or the S&F mode, information on a maximum delivery time for the S&F mode, ephemeris information of the satellite, or footprint information provided by the satellite.

In embodiments of the present disclosure, a method performed by a satellite for providing a non-terrestrial network (NTN) access is provided. The method may comprise transmitting, to a user equipment (UE), a message including information regarding a store and forward (S&F) mode, and performing communication with the UE based on the message. The message may include at least one of information indicating whether a real-time (RT) mode is momentarily supported, indication information for indicating whether an operation mode of a cell is the RT mode or the S&F mode, information on a maximum delivery time for the S&F mode, ephemeris information of the satellite, or footprint information provided by the satellite.

In embodiments of the present disclosure, a method performed by a user equipment (UE) for performing a non-terrestrial network (NTN) access is provided. The method may comprise receiving, from a satellite configured to perform functions of an evolved node B (eNB), a message including information regarding a store and forward (S&F) mode, and performing communication with the satellite based on the message. The message may include at least one of information indicating whether a real-time (RT) mode is momentarily supported, indication information for indicating whether an operation mode of a cell is the RT mode or the S&F mode, information on a maximum delivery time for the S&F mode, ephemeris information of the satellite, or footprint information provided by the satellite.

### [Description of the Drawings]

FIG. 1 illustrates a wireless communication system.
FIGS. 2A and 2B illustrate an example of a non-terrestrial network (NTN).
FIG. 3A illustrates an example of a control plane (C-plane).
FIG. 3B illustrates an example of a user plane (U-plane).
FIG. 4 illustrates an example of a resource structure in a time-frequency domain in a wireless communication system.
FIG. 5 illustrates an example of a store and forward (S&F) mode in an Internet of Things (IoT) non-terrestrial network (NTN).
FIG. 6 illustrates an example of signaling for providing S&F configuration information.
FIG. 7 illustrates an example of signaling for providing S&F condition information.
FIG. 8 illustrates an example of signaling for supporting an S&F mode.
FIG. 9 illustrates an example of signaling for supporting an S&F mode.
FIG. 10 illustrates an example of components of a user equipment (UE).
FIG. 11 illustrates an example of components of a satellite.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to a signal (e.g., a signal, information, a message, or signaling), terms referring to a resource (e.g., a symbol, a slot, a subframe, a radio frame, a subcarrier, a resource element (RE), a resource block (RB), a bandwidth part (BWP), or an occasion), terms referring for a calculation state (e.g., a step, an operation, or a procedure), terms referring to data (e.g., a packet, a user stream, information, a bit, a symbol, or a codeword), terms referring to a channel, terms referring to a network entity, terms referring to a device component, and the like, used in the following description are exemplified for convenience of explanation. Therefore, the present disclosure is not limited to terms to be described below, and another term having an equivalent technical meaning may be used.

In the following description, a physical channel and a signal may be used interchangeably with data or a control signal. For example, a physical downlink shared channel (PDSCH) is a term referring to a physical channel through which data is transmitted, but the PDSCH may also be used to refer to data. That is, in the present disclosure, the expression 'transmitting a physical channel' may be interpreted equally to the expression 'transmitting data or a signal through a physical channel'.

Hereinafter, in the present disclosure, upper signaling means a signal transmission method transmitted from a base station to a terminal using a downlink data channel of a physical layer, or from a terminal to a base station using an uplink data channel of a physical layer. The upper signaling may be understood as radio resource control (RRC) signaling or a MAC control element (hereinafter, referred to as 'CE").

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

In the present disclosure, a signal quality may be, for example, at least one of reference signal received power (RSRP), beam reference signal received power (BRSRP), a reference signal received quality (RSRQ), a received signal strength indicator (RSSI), a signal to interference and noise ratio (SINR), a carrier to interference and noise ratio (CINR), a signal to noise ratio (SNR), error vector magnitude (EVM), a bit error rate (BER), and a block error rate (BLER). In addition to the above-described example, of course, other terms having an equivalent technical meaning or other metrics indicating a channel quality may be used. Hereinafter, in the present disclosure, high signal quality means a case in which a signal quality value related to a signal size is large or a signal quality value related to an error rate is small. When the signal quality is high, it may mean that a smooth wireless communication environment is guaranteed. In addition, an optimal beam may mean a beam having the highest signal quality among beams.

The present disclosure describes various embodiments using terms used in a portion of communication standards (e.g., 3rd Generation Partnership Project (3GPP) and European Telecommunications Standards Institute (ETSI)), but this is only an example for explanation. Various embodiments of the present disclosure may be easily modified and applied in another communication system.

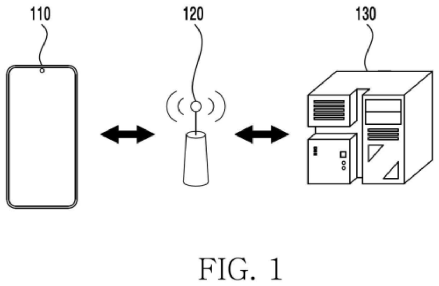

FIG. 1 illustrates a wireless communication system.

Referring to FIG. 1, FIG. 1 illustrates a terminal 110 and a base station 120 as a portion of nodes that utilize a wireless channel in a wireless communication system using an evolved Universal Mobile Telecommunications System (UMTS) radio access network (EUTRAN) or New Radio (NR), as a wireless interface of Radio Access Technology (RAT). FIG. 1 illustrates only one base station, but the wireless communication system may further include another base station identical or similar to the base station (e.g., LTE eNB or NR gNB) 120.

The terminal 110, which is an apparatus used by a user, communicates with the base station 120 through a wireless channel. A link from the base station 120 to the terminal 110 is referred to as a downlink (DL), and a link from the terminal 110 to the base station 120 is referred to as an uplink (UL). In addition, although not illustrated in FIG. 1, the terminal 110 and another terminal may perform communication with each other through a wireless channel. At this time, a device-to-device link (D2D) between the terminal 110 and the other terminal is referred to as a sidelink, and the sidelink may be used interchangeably with a PC5 interface. In some other embodiments, the terminal 110 may be operated without user involvement. According to an embodiment, the terminal 110, which is an apparatus that performs machine type communication (MTC), may not be carried by a user. In addition, according to an embodiment, the terminal 110 may be a narrowband (NB)-Internet of Things (IoT) device.

In describing the systems and methods in the present specification, the terminal 110 may be an electronic device used to communicate voice and/or data to the base station 120, and the base station 120 may, in turn, communicate with a network (e.g., a public exchange telephone network (PSTN), the Internet, and the like) of devices.

In addition, the terminal 110 may be referred to as a terminal, a 'user equipment (UE)', a 'vehicle', a 'customer premises equipment (CPE)', a 'mobile station', a 'subscriber station', a 'remote terminal', a 'wireless terminal', an 'electronic device', a 'user device', an 'access terminal', a 'mobile terminal', a 'remote station', a 'user terminal', a 'subscriber unit', a 'mobile device', or another term having an equivalent technical meaning thereto.

Additionally, examples of terminals 110 include cellular phones, smart phones, personal digital assistants (PDAs), laptop computers, netbooks, e-readers, wireless modems, and the like. In 3GPP standards, the terminal 110 is typically referred to as UE. However, since the scope disclosed in the present specification should not be limited to the 3GPP standards, terms "UE" and "terminal" may be used interchangeably in the present specification to mean a more general term "wireless communication device". The UE may also more generally be referred to as a terminal device.

The base station 120 is a network infrastructure that provides wireless access to the terminal 110. The terminal 110 has coverage defined based on a distance at which a signal may be transmitted. In the 3GPP standards, the base station 120 may generally be referred to as a 'node B', an 'evolved node B (eNodeB, eNB)', a '5th generation node', a 'next generation nodeB (gNB)', a 'home enhanced or evolved node B (HeNB)', an 'access point (AP)', a 'wireless point', a 'transmission/reception point (TRP)', or another term having an equivalent technical meaning thereto.

Since the scope disclosed in the present specification should not be limited to the 3GPP standards, terms "base station", "node B", "eNB", and "HeNB" may be used interchangeably in the present specification to mean a more general term "base station". In addition, the term "base station" may be used to indicate an access point. The access point may be an electronic device that provides access to a network (e.g., a local area network (LAN), the Internet, and the like) for wireless communication devices. The term "communication device" may be used to indicate both a wireless communication device and/or a base station. The eNB or the gNB may also more generally be referred to as a base station device.

The base station 120 may communicate with a core network entity 130. For example, the core network entity 130 may include a mobility management entity (MME) responsible for a control plane, such as a terminal 110 access and mobility control function, and a serving gateway (S-GW) responsible for a control function for user data.

The terminal 110 may perform beamforming with the base station 120. The terminal 110 and the base station 120 may transmit and receive a wireless signal in a relatively low frequency band (e.g., a frequency range 1 (FR 1) of NR). In addition, the terminal 110 and the base station 120 may transmit and receive a wireless signal in a relatively high frequency band (e.g., FR 2 (or, FR 2-1, FR 2-2, FR 2-3), or FR 3 of NR), a millimeter wave (mmWave) band (e.g., 28 GHz, 30 GHz, 38 GHz, or 60 GHz)). In order to improve a channel gain, the terminal 110 and the base station 120 may perform the beamforming. Herein, the beamforming may include transmission beamforming and reception beamforming. The terminal 110 and the base station 120 may assign directivity to a transmission signal or a reception signal. To this end, the terminal 110 and the base station 120 may select serving beams through a beam search or a beam management procedure. After the serving beams are selected, subsequent communication may be performed through a resource that is in a Quasi Co-Location (QCL) relationship with a resource transmitting the serving beams.

If large-scale characteristics of a channel transferring a symbol on a first antenna port may be inferred from a channel transferring a symbol on a second antenna port, the first antenna port and the second antenna port may be evaluated to be in the QCL relationship. For example, the large-scale characteristics may include at least one of a delay spread, a doppler spread, a doppler shift, an average gain, an average delay, and a spatial receiver parameter.

Both the terminal 110 and the base station 120 may perform beamforming, but embodiments of the present disclosure are not necessarily limited thereto. In some embodiments, the terminal 110 may or may not perform beamforming. In addition, the base station 120 may or may not perform beamforming. That is, only one of the terminal 110 and the base station 120 may perform beamforming, or both the terminal 110 and the base station 120 may not perform beamforming.

In the present disclosure, a beam, which means a spatial flow of a signal in a wireless channel, may be formed by one or more antennas (or antenna elements), and this formation process may be referred to as beamforming. The beamforming may include at least one of analog beamforming or digital beamforming (e.g., Precoding). A reference signal transmitted based on the beamforming may include, for example, a demodulation-reference signal (DM-RS), a channel state information-reference signal (CSI-RS), a synchronization signal/physical broadcast channel (SS/PBCH), and a sounding reference signal (SRS). In addition, as a configuration for each reference signal, an information element (IE) such as a CSI-RS resource or an SRS-resource may be used, and this configuration may include information associated with the beam. The information associated with the beam may mean whether a corresponding configuration (e.g., a CSI-RS resource) uses the same spatial domain filter as another configuration (e.g., another CSI-RS resource in the same CSI-RS resource set), or another spatial domain filter, or which reference signal is quasi-co-located (QCL) with, and if it is QCL, which type (e.g., QCL type A, B, C, and D).

Hereinafter, to describe embodiments, a terminal may be referred to as UE 110, and a base station may be referred to as an eNB 120 or a gNB 120. Hereinafter, in the present disclosure, the eNB 120 is described as an example as a node that provides an access network in order to describe IoT NTN for IoT UE, but it is of course that it may be applied to the gNB 120 in the same or similar manner.

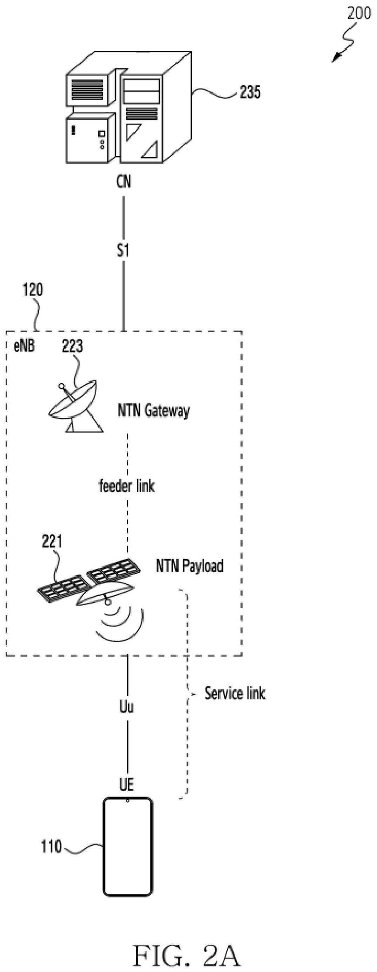

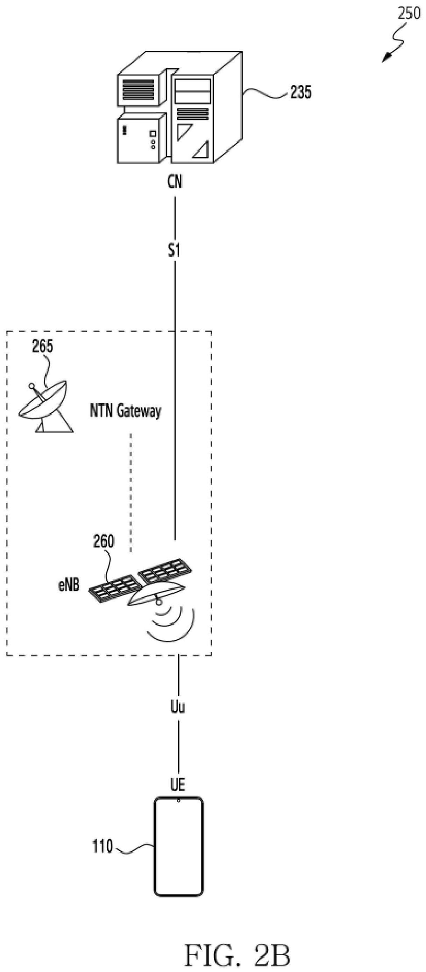

FIGS. 2A and 2B illustrate an example of a non-terrestrial network (NTN). In FIG. 2A, an example of the non-terrestrial network (NTN) using a transparent satellite is illustrated. In FIG. 2B, an example of the non-terrestrial network (NTN) using a regenerative satellite is illustrated. The NTN refers to an access network that provides non-terrestrial access to UE (e.g., the UE 110) through an NTN payload mounted on an airborne or space-borne NTN vehicle and an NTN gateway. The NG-RAN may include one or more eNBs (e.g., the eNB 120).

Referring to FIG. 2A, NTN 200 indicates a network environment according to the transparent satellite. The NTN 200, as the eNB 120, may include an NTN payload 221 and an NTN gateway 223. The NTN payload 221 is a network node mounted on a phase or a high altitude platform station (HAPS) that provides a connection function between a service link (described later) and a feeder link (described later). The NTN gateway 223 is an earth station disposed on a surface of the earth that provides a connection to the NTN payload 221 using the feeder link. The NTN gateway 223 is a transport network layer (TNL) node. The NTN 200 may provide the UE 110 with non-terrestrial NR access. The NTN 200 may provide the UE 110 with the non-terrestrial NR access through the NTN payload 221 and the NTN gateway 223. A link between the NTN payload 221 and the UE 110 may be referred to as the service link. A link between the NTN gateway 223 and the NTN payload 221 may be referred to as the feeder link. The feeder link may correspond to a wireless link.

The NTN payload 221 may receive wireless protocol data from the UE 110 through the service link. The NTN payload 221 may transparently transmit the wireless protocol data to the NTN gateway 223 through the feeder link. Accordingly, the NTN payload 221 and the NTN gateway 223 may be seen as one eNB 120 from a perspective of the UE 110. The NTN payload 221 and the NTN gateway 223 may perform communication with the UE 110 through a Uu interface, which is a general wireless protocol. That is, the NTN payload 221 and the NTN gateway 223 may perform wireless protocol communication with the UE 110 like the one eNB 120. The NTN gateway 223 may perform communication with a core network entity 235 (e.g., a mobility management entity (MME) or a serving gateway (S-GW)) through an S1 interface.

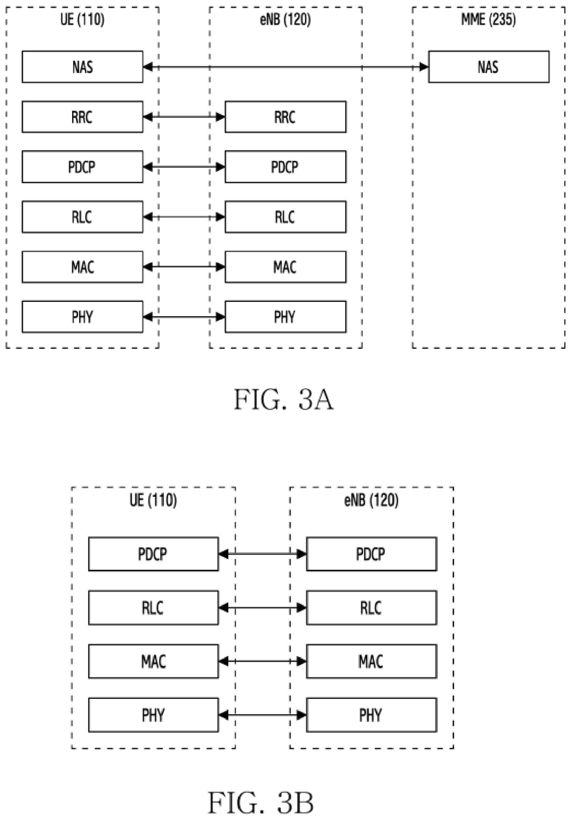

According to an embodiment, the NTN payload 221 and the NTN gateway 223 may use a wireless protocol stack in a control plane of FIG. 3A to be described later. In addition, according to an embodiment, the NTN payload 221 and the NTN gateway 223 may use a wireless protocol stack in a user plane of FIG. 3B.

In FIG. 2A, one NTN payload 221 and one NTN gateway 223 included in the eNB 120 have been described, but embodiments of the present disclosure are not limited thereto. For example, eNB may include a plurality of NTN payloads. In addition, for example, an NTN payload may be provided by a plurality of eNBs. That is, an implementation scenario illustrated in FIG. 2A is an example and does not limit embodiments of the present disclosure.

Referring to FIG. 2B, an NTN 250 indicates a network environment according to the regenerative satellite. The NTN 250 may include a satellite 260 operating as the eNB 120. The satellite 260 indicates a space-borne vehicle equipped with a regenerative payload communication transmitter disposed in a low-earth orbit (LEO), a medium-earth orbit (MEO), or a geostationary earth orbit (GEO). The satellite 260 may be referred to as a regenerative payload or a regenerative satellite. The satellite 260 may indicate a payload configured to convert and amplify an uplink RF signal before transmitting the uplink RF signal to a downlink, and the conversion of the signal may mean digital processing capable of including demodulation, decoding, re-encoding, re-modulation and/or filtering. The NTN 250 may include an NTN gateway 265, which is an entity connected to the satellite 260 and disposed on the ground. The NTN gateway 265 is an earth station, disposed on a surface of the earth, that provides a connection to the satellite 260 using the feeder link. The NTN 250 may provide the UE 110 with the non-terrestrial NR access. The NTN 250 may provide the UE 110 with the non-terrestrial NR access through the satellite 260 and the NTN gateway 265.

The satellite 260 may be configured to regenerate signals received from the terminal 110 or the Earth station (e.g., the NTN gateway 265). The Uu interface may be defined between the satellite 260 and the terminal 110. A satellite radio interface (SRI) on the feeder link may be defined between the satellite 260 and the NTN gateway 265. Although not illustrated in FIG. 2B, the satellite 260 may provide inter-satellite links (ISL) between satellites. The ISL may be a transmission link between satellites, and the ISL may be a 3GPP, or a wireless interface (e.g., an X2 interface or an XN interface) or an optical interface, in which the 3GPP is not defined. The satellite 260 may perform communication with the core network entity 235 (e.g., the MME or the S-GW) through the S1 interface, based on the NTN gateway 265. According to an embodiment, the satellite 260 may use the wireless protocol stack in the control plane of FIG. 3A to be described later. In addition, according to an embodiment, the satellite 260 may use the wireless protocol stack in the user plane of FIG. 3B.

In FIG. 2B, the satellite 260 operating as the eNB 120 has been described, but embodiments of the present disclosure are not limited thereto. The eNB 120 according to embodiments may be implemented as a distributed deployment using a centralized unit (CU) configured to perform a function of upper layers (e.g., a packet data convergence protocol (PDCP), or a radio resource control (RRC)) of an access network and a distributed unit (DU) configured to perform a function of lower layers. An interface between the CU and the distributed unit (DU) may be referred to as an F1 interface. The centralized unit (CU) may be in charge of a function of a layer upper than the DU by being connected to one or more DUs. For example, the CU may be in charge of a function of radio resource control (RRC) and packet data convergence protocol (PDCP) layers, and the DU and a radio unit (RU) may be in charge of a function of a lower layer. The DU may be in charge of a function of radio link control (RLC), media access control (MAC), and physical (PHY) layers. In this distributed deployment, the satellite 260 may be used as the CU or the DU constituting the eNB 120.

FIG. 3A illustrates an example of a control plane (C-plane). Hereinafter, at least a portion of descriptions of an eNB 120 may be understood as pertaining to a satellite 260.

Referring to FIG. 3A, in the C-plane, UE 110 and AMF 235 may perform non-access stratum (NAS) signaling. In the C-plane, the UE 110 and the eNB 120 may perform communication according to a protocol specified in each of a RRC layer, a PDCP layer, a RLC layer, a MAC layer, and a PHY layer.

In an NTN access, a main function of the RRC layer may include at least a portion of the following functions.
- Broadcasting access stratum (AS) and NAS related system information
- Paging
- Establishment, maintenance, and release of an RRC connection between the UE and an access network, including, more specifically, control over RLC, MAC, and PHY:
   - Addition, modification and release of Carrier Aggregation
   - Addition, modification and release of dual connectivity between NR or E-UTRA and NR.
- Security function including Key Management;
- Establishment, configuration, maintenance and release of Signaling Radio Bearer (SRB) and Data Radio Bearer (DRB)
- Movement function including:
   - Transferring handover and context;
   - Control UE cell selection and reselection and cell selection and reselection;
   - Mobility between RATs.
- Quality of service (QoS) management function;
- UE measurement report and report control;
- Radio link failure detection and recovery
- Message transmission from/to UE to/from NAS.

In the NTN access, a main function of the PDCP layer may include at least a portion of the following functions.
- Header compression and decompression: ROHC only
- Transfer of user data
- In-sequence delivery of upper layer PDUs
- Out-of-sequence delivery of upper layer PDUs
- Duplicate detection of lower layer SDUs
- Retransmission of PDCP SDUs
- Ciphering and deciphering
- Timer-based SDU discard in uplink.

In the NTN access, a main function of the RLC layer may include at least a portion of the following functions.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the NTN access, the MAC layer may be connected to multiple RLC layer devices configured in a terminal, and a main function of the MAC may include at least a portion of the following functions.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

In NTN access, each entity (e.g., the terminal 110, or the eNB 120) in the physical layer may perform channel coding and modulating upper layer data, converting into an OFDM symbol and transmitting it to a wireless channel, or demodulating and channel decoding the OFDM symbol received via the wireless channel and transmitting it to the upper layers.

FIG. 3B illustrates an example of a user plane (U-plane). Hereinafter, at least a portion of descriptions of the eNB 120 may be understood as pertaining to the satellite 260.

Referring to FIG. 3B, in the U-plane, the UE 110 and the eNB 120 may perform communication according to a protocol specified in each of the PDCP layer, the RLC layer, the MAC layer, and the PHY layer. For the PDCP layer, the RLC layer, the MAC layer, and the PHY layer, the description regarding FIG. 3A may be referred to.

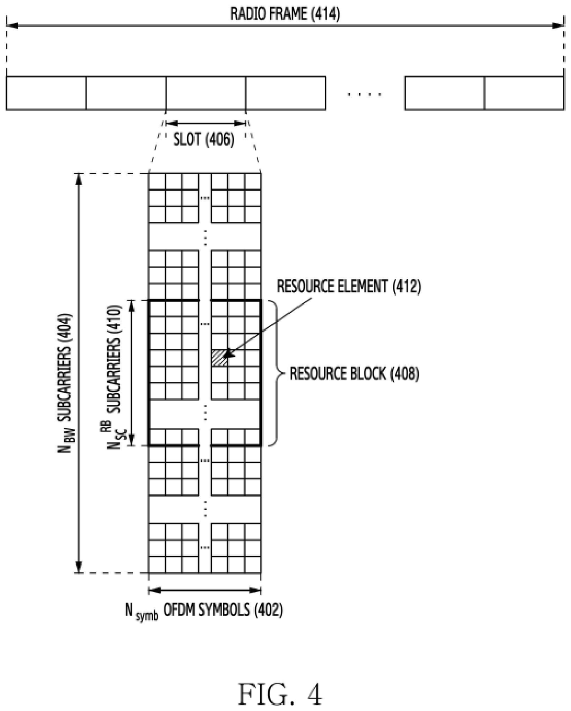

FIG. 4 illustrates an example of a resource structure of a time-frequency domain supported by a wireless communication system to which an embodiment proposed in the present specification may be applied. In FIG. 4, a resource structure of an LTE network for IoT NTN is described as an example, but embodiments of the present disclosure are not limited thereto. It is of course that signaling and related operations according to embodiments of the present disclosure may be applied to an NR system in the same or similar manner.

Referring to FIG. 4, a horizontal axis indicates a time domain, and a vertical axis indicates a frequency domain. A minimum transmission unit in the time domain is an OFDM symbol, and one slot 406 (e.g., 7 in the LTE system) may be configured with N_{symb} OFDM symbols 402. Referring to FIG. 4, in the wireless communication system to which the present invention is applied, one radio frame 414 may be defined as having a length of 10 ms, which is configured with 10 subframes having the same length of 1 ms. Additionally, one radio frame 414 may be divided into 5 ms half-frame, and each half-frame includes 5 subframes. In FIG. 4, the slot 406 is configured with 14 OFDM symbols, but a length of the slot may vary according to subcarrier spacing. In the wireless communication system in which an invention proposed in the present specification may be applied, a radio resource supported by the wireless communication system is configured with symbols, which are a plurality of time resources, and sub-carriers, which are a plurality of frequency resources, and each time resource and frequency resource may be represented as a two-dimensional resource grid. In FIG. 4, one square, which is the smallest physical resource configured with one sub-carrier and one symbol in the resource grid, is referred to as a resource element (RE) 412.

In the wireless communication system in which the invention proposed in the present specification may be applied, a minimum transmission unit in the frequency domain is a subcarrier, and a carrier bandwidth that configures a resource grid may be configured with NBW subcarriers 404. A basic unit of a resource in a time-frequency domain is the resource element (RE) 412, and it may be represented by an OFDM symbol index and a subcarrier index. A resource block (RB) 408 may include a plurality of resource elements 412. In the wireless communication system in which the invention proposed in the present specification may be applied, the resource block (RB) 408 (or a physical resource block (PRB)) may be defined with Nsymb (e.g., 7) consecutive OFDM symbols in the time domain and NSCRB (e.g., 12) consecutive subcarriers in the frequency domain. A data rate may increase in proportion to the number of RBs scheduled to a terminal. In a case of a frequency division duplex (FDD) system in which a downlink and an uplink are operated by being distinguished by frequencies, a downlink transmission bandwidth and an uplink transmission bandwidth may be different from each other. A channel bandwidth indicates a radio frequency (RF) bandwidth corresponding to a system transmission bandwidth. For example, a channel bandwidth may be one of 1.4 MHz (e.g., 6 PRBs), 3 MHz (e.g., 15 PRBs), 5 MHz (e.g., 25 PRBs), 10 MHz (e.g., 50 PRBs), 15 MHz (e.g., 75 PRBs), and 20 MHz (e.g., 100 PRBs).

E-UTRAN supports radio access over non-terrestrial networks for not only general UEs, but also bandwidth limited (BL) UEs, UEs in enhanced coverage and NB-IoT UEs. Support for non-terrestrial networks encompasses platforms that provide radio access through Geosynchronous orbits (GSO), Non-Geosynchronous Orbit (NGSO), which includes Low-Earth Orbit (LEO) and Medium Earth Orbit (MEO) or High Altitude Platform Systems (HAPS).

In the transparent payload mode, the NTN gateway and the NTN payload (i.e., satellite) together perform the role of the eNB, and in the regenerative payload mode, the NTN payload (i.e., satellite) can perform the role of the eNB.

The transparent NTN payload transparently forwards the radio protocol received from the UE (via the service link) to the NTN Gateway (via the feeder link) and vice-versa. The regenerative payload terminates the Uu interface (via the service link), S1 and X2 intefaces. An NTN Gateway may serve multiple transparent or regenerative NTN payloads. A transparent or regenerative NTN payload may be served by multiple eNBs. A regenerative NTN payload may terminate one or more inter-satellite links toward other regenerative payloads. As a non-limiting example, the transparent NTN-payload may change the carrier frequency, before re-transmitting it on the service link, and vice versa (respectively on the feeder link). In NTN, a Tracking Area corresponds to a fixed geographical area. In NTN, the same value is used in AS and NAS when the satellite ID referring to the same satellite.

Three types of service links are supported:
- Earth-fixed: provisioned by beam(s) continuously covering the same geographical areas all the time (e.g., the case of GSO satellites);
- Quasi-Earth-fixed: provisioned by beam(s) covering one geographic area for a limited period of time and a different geographic area during another period of time (e.g., the case of NGSO satellites generating steerable beams);
- Earth-moving: provisioned by beam(s) whose coverage area slides over the Earth surface (e.g., the case of NGSO satellites generating fixed or non-steerable beams).

With NGSO satellites, the eNB can provide either quasi-Earth-fixed cell coverage or Earth-moving cell coverage, while eNB operating with GSO satellites can provide Earth fixed cell coverage or quasi-Earth-fixed cell coverage.

Store and forward mode provides communication service to the UE when the serving satellite has a discontinuous connection to the ground network and such connection is not available when the satellite is interacting with the UE. The eNB can indicate whether a cell is operating in store and forward mode.

The Store and Forward Satellite operation mode refers to an operation mode that provides to the UE a communication service when the serving satellite has a discontinuous connection to the NTN gateway and connection to the NTN gateway is not available when the satellite is interacting with the UE.

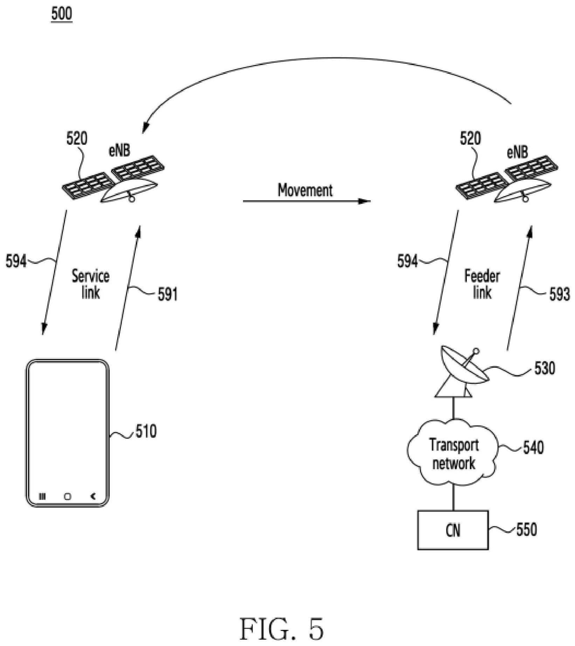

FIG. 5 illustrates an example 500 of a store and forward (S&F) mode in an Internet of Things (IoT) non-terrestrial network (NTN).

Referring to FIG. 5, UE 510 may perform communication with a satellite 520. The UE 510 may be referred to as the terminal 110 of FIG. 1. The satellite 520 may be referred to as a base station 120 or a network entity that performs at least a portion of functions of the base station 120. According to an embodiment, the satellite 520 may be an eNB that provides IoT NTN. The satellite 520 may provide E-UTRAN for an IoT device (e.g., the UE 510). The UE 510 may access the satellite 520 through the E-UTRAN. A connection between the satellite 520 and the UE 510 may be referred to as a service link. The satellite 520 may move along a specified orbit. According to the movement of the satellite 520, the satellite 520 may be connected to a network entity (hereinafter, referred to as a ground segment) (e.g., an NTN gateway 530) disposed on the ground. The connection between the satellite 520 and the NTN gateway 530 may be referred to as a feeder link. The NTN gateway 530 may be connected to a core network 550 through a transport network 540. As the satellite 520 moves repeatedly along the specified orbit, the service link may or may not be available. As the satellite 520 moves repeatedly along the specified orbit, the feeder link may be available or unavailable.

The satellite 520 may support the store and forward (S&F) mode. The store and forward (S&F) mode may indicate an operation mode of a system capable of satellite-access. A delay-tolerant communication service may be provided through the store and forward (S&F) mode. When a satellite connection is intermittently or temporarily unavailable (e.g., in a case of serving the UE 510 positioned in a coverage where a feeder link to the ground segment (e.g., the NTN gateway 530) is not simultaneously active), a level of service that stores and forwards data may be provided. According to an embodiment, the satellite 520 may be used to provide a delay-tolerant IoT service through a non-geostationary satellite orbit (NGSO) (e.g., low earth orbit (LEO)). According to an embodiment, the satellite 520 may provide satellite access to the UE 510 that does not have a global navigation satellite system (GNSS) receiver or has difficulty accessing a GNSS service. As a non-limiting example, the satellite 520 may perform UE-satellite-UE communication with the UE 510. For example, the UE 510 may perform communication with the satellite 520 without communicating with the ground segment (e.g., the NTN gateway 530) in order to avoid long delays and limited data rates and to reduce resource consumption. The S&F mode may be used for the delay-tolerant service and/or an interruption-tolerant service. For example, in a 3GPP context, a short message service (SMS) may be used for the S&F mode, and an end-to-end connection between endpoints (e.g., the UE 510 and an application server) may not be required. Only a connection between an endpoint (e.g., the UE 510) and an intermediate node (e.g., a short message service center (SMSC)) may be required.

In the S&F mode, the service link between the UE 510 and the satellite 520 may repeat an available state and an unavailable state. The service link between the UE 510 and the satellite 520 being in the available state indicates that a position of the satellite 520 belongs to a range (hereinafter, a service-available orbital section) in which the satellite 520 may serve a region (e.g., a footprint) where the UE 510 is positioned on an orbit of the satellite 520. The service link between the UE 510 and the satellite 520 being in the unavailable state indicates that a position of the satellite 520 belongs to a range (hereinafter, a service-unavailable orbital section) in which the satellite 520 has difficulty in serving the region (e.g., the footprint) where the UE 510 is positioned on the orbit of the satellite 520. In the S&F mode, the feeder link between the satellite 520 and the ground segment (e.g., the NTN gateway 530) may repeat between an available state and an unavailable state. The feeder link between the satellite 520 and the ground segment (e.g., the NTN gateway 530) being in the available state indicates that a position of the satellite 520 belongs to a range (hereinafter, a feeder-available orbital section) in which the satellite 520 may serve a region (e.g., a footprint) where the ground segment (e.g., the NTN gateway 530) is positioned on the orbit of the satellite 520. The feeder link between the satellite 520 and the ground segment (e.g., the NTN gateway 530) being in the unavailable state indicates that a position of the satellite 520 belongs to a range (hereinafter, a feeder-unavailable orbital section) in which the satellite 520 has difficulty in serving a region (e.g., the footprint) where the ground segment (e.g., the NTN gateway 530) is positioned on the orbit of the satellite 520. For the UE 510, availability of the service link and availability of the feeder link may not always occur simultaneously. For example, even if a state of the service link changes from the available state to the unavailable state, a state of the feeder link does not necessarily change. For example, even if the state of the feeder link changes from the available state to the unavailable state, the state of the service link does not necessarily change.

According to an embodiment, the UE 510 may transmit a signal. The signal may be mobile originated (MO) data. For example, in operation 591, the UE 510 may transmit uplink data (e.g., PUSCH) to the satellite 520 when the service link is in the available state. The satellite 520 may receive the uplink data from the UE 510. Since the feeder link is not in the available state, the satellite 520 may store the uplink data. Thereafter, the satellite 520 may move. According to the movement, a state of the feeder link may change from the available state to the unavailable state. In operation 592, the satellite 520 may transmit the uplink data through a network entity (e.g., the NTN gateway 530) disposed on the ground. The uplink data may be transmitted to a data network through the core network 550. Hereinafter, a service in which a message originating from the UE 510 is transmitted through the satellite 520 in the S&F mode may be referred to as a mobile originated (MO) service.

According to an embodiment, the satellite 520 may transmit a signal to the UE 510. The signal may be mobile terminated (MT) data. For example, in operation 593, while the feeder link is available, the satellite 520 may receive data from an external device (e.g., a server, or another UE) through the data network and the core network 550 (e.g., UPF). The satellite 520 may move. According to the movement of the satellite 520, a state of the feeder link may change from the available state to the unavailable state. According to the movement of the satellite 520, a state of the service link between the satellite 520 and the UE 510 may change from the unavailable state to the available state. In operation 594, the satellite 520 may transmit downlink data (e.g., PDSCH) to the UE 510 when the service link is in the available state. Hereinafter, a service in which a message is delivered to the UE 510 through the satellite 520 in the S&F mode may be referred to as a mobile terminated (MT) service.

According to embodiments of the present disclosure, a network (e.g., an eNB) may indicate store-and-forward mode to a terminal (e.g., a UE) via a SIB1 message. For example, the SIB1 message may include an 'sf-OperationMode' IE. The IE may indicate that the cell is operating in Store and Forward mode. If the field is present, UEs supporting the Store and Forward operation ignores *cellBarred-NTN* and *cellBarred.* The IE may indicate to the value 'barred' or the value 'notBarred'. The value 'barred' means the cell is barred for NTN connectivity with the Store and Forward operation, as defined in TS 36.304. The value 'notBarred' means the cell allows UEs supporting the Store and Forward operation to access. If the field is absent, the SIB1 message indicates that the NTN cell is operating in normal mode, i.e., not in the Store and Forward mode.

According to embodiments of the present disclosure, a network (e.g., an eNB) may indicate time information related to store-and-forward mode to a terminal (e.g., a UE) via a SIB31. The SIB31 may include satellite assistance information for a serving cell. As the satellite assistance information, ephemeris information, satellite ID, and reference position information may be included in the SIB31. *In an embodiment,* the SIB31 message may include switching time information (e.g., t-ModeSwitching IE).If *sf-OperationMode* is present in *SIB1,* this field indicates the time information on when an NTN cell is going to switch from the Store and Forward Satellite operation mode to the normal mode; otherwise, this field indicates the time information on when an NTN cell is going to switch from the normal mode to the Store and Forward Satellite operation mode.

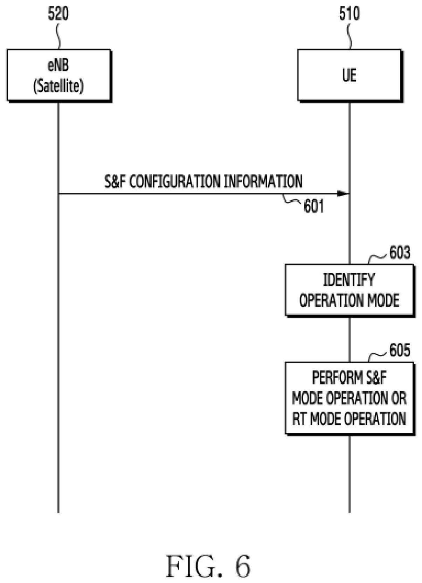

FIG. 6 illustrates an example of signaling for providing S&F configuration information. A satellite 520 may be configured to perform functions of an eNB. For example, the eNB may be disposed on a board of the satellite 520, and entities of a core network (e.g., a core network 550) may be disposed on the ground. As an example, a portion of the eNB and the entities of the core network (or a portion of a particular entity (e.g., a mobile management entity (MME))) may be disposed on the board of the satellite 520, and other entities of the core network may be disposed on the ground.

Referring to FIG. 6, in operation 601, the satellite 520 may transmit S&F configuration information to UE 510. A S&F mode is not only an important function in an early stage of distribution, when the number of satellites is small and the number of terrestrial stations is limited, but it is also generally important for delay-tolerant traffic in general. The satellite 520 may support the S&F mode, a real time mode, or both the S&F mode and the RT mode. An operation of the UE 510 may vary according to whether the S&F mode is supported in a sole transmission method or in conjunction with the general RT mode. As an example, support of the S&F mode may be used to determine whether to use TCP/IP or to use a UDP protocol for transmission.

According to various embodiments of the present disclosure, the S&F configuration information may include an indicator. In an embodiment, the S&F configuration information may include an indicator indicating whether the satellite 520 supports the S&F mode. For example, the indicator may be 1-bit. The indicator may be cell-specific, DRB-specific, and/or area-specific. In an embodiment, the S&F configuration information may include an indicator indicating whether the RT mode is supported. For example, the indicator may be 1-bit. The indicator may be cell-specific, DRB-specific, and/or area-specific. In an embodiment, the S&F configuration information may include information for indicating whether the RT mode is momentarily supported. The RT mode may be momentarily supported according to a movement orbit of the satellite 520. The S&F configuration information may include an indicator indicating the momentary support of the RT mode and information on a time at which the RT mode is supported (e.g., a timer, or a validity time).

According to various embodiments of the present disclosure, the S&F configuration information may indicate a support unit of the S&F mode. According to an embodiment, the S&F configuration information may include information on a space supporting the S&F mode. For example, the S&F configuration information may include at least one of footprint information provided by the satellite 520 or information on a list of neighbor cells supporting the S&F mode. According to an embodiment, the S&F configuration information may include a list of data radio bearers (DRBs) supporting the S&F mode. According to an embodiment, the S&F configuration information may include a list of quality of service (QoS) flows supporting the S&F mode. The S&F configuration information may also include information on whether the RT mode is supported for each element (e.g., a cell, or an area) indicating the support of the S&F mode. For example, the S&F configuration information may indicate a cell ID (e.g., a corresponding cell, or a neighbor cell), whether a cell indicated by the cell ID supports the S&F mode, and whether the cell supports the RT mode. As a non-limiting example, the S&F configuration information may additionally include information on a time, a space (e.g., a tracking area (TA), or a footprint), and a service unit (e.g., DRB, or QoS flow) in which the cell supports the RT mode. If the S&F mode is supported, it may be additionally indicated whether the RT mode is supported for the corresponding cell. If the S&F mode is not supported, it may be understood that the RT mode is supported. As a non-limiting example, the S&F configuration information may include an indicator indicating whether the S&F mode or the RT mode is momentarily available or not (or blocked).

According to various embodiments of the present disclosure, the S&F configuration information may include information on an expected delivery time in the S&F mode. Delivery delay is at least a time required to reach the next feeder link, but may be longer in a case that all data may not be offloaded while a feeder link is visible from the satellite 520. Therefore, the maximum value of the expected delivery time in the S&F mode may be required to be indicated by the UE 510. If both the S&F mode and the RT mode are supported by the satellite 520, the UE 510 may be used to determine whether to use the S&F mode or the RT mode according to service requirements. For example, the information on the expected delivery time may indicate the maximum value of the expected delivery time. The information on the expected transmission time is determined by the satellite 520, and the determined value may be indicated to the UE 510 through explicit signaling. For another example, the information on the expected delivery time may include parameters for calculating the expected delivery time. The UE 510 may measure an orbital movement of the satellite 520 through the parameters and, accordingly, determine a range (e.g., the minimum value, or the maximum value) of the expected delivery time. The UE 510 may determine whether to use the S&F mode or the RT mode based on a calculation result.

In operation 603, the UE 510 may identify an operation mode. The UE 510 may identify an operation mode of a cell provided by the satellite 520. The S&F configuration information in the operation 601 may be specific to the cell. The UE 510 may determine whether the cell supports the S&F mode, the RT mode, or both the S&F mode and the RT mode. For example, in a case that the cell supports the S&F mode, the UE 510 may determine the S&F mode as the operation mode. For example, in a case that the cell supports the RT mode, the UE 510 may determine the RT mode as the operation mode. For example, in a case that the cell above supports both the S&F mode and the RT mode, the UE 510 may determine one of the S&F mode and the RT mode as the operation mode.

In operation 605, the UE 510 may perform operations according to the S&F mode or the RT mode. For example, the UE 510 may perform the operations according to FIG. 5 based on the S&F mode. The UE 510 may transmit data for services (e.g., as a non-real-time service, SMS, or an e-mail service) available in the S&F mode to the satellite 520 or receive it from the satellite 520. On the other hand, the UE 510 may be difficult to perform some services (e.g., a real-time service, a streaming service, a voice call, or a video call) with the satellite 520 in the S&F mode. For example, the UE 510 may communicate with the satellite 520 based on the RT mode. The UE 510 may use various services (e.g., the real-time service, and the non-real-time service) in the RT mode. The UE 510 may transmit data to the satellite 520 or may receive data from the satellite 520. On the other hand, classification of these service types is exemplary and should not be interpreted as limiting the embodiments of the present disclosure.

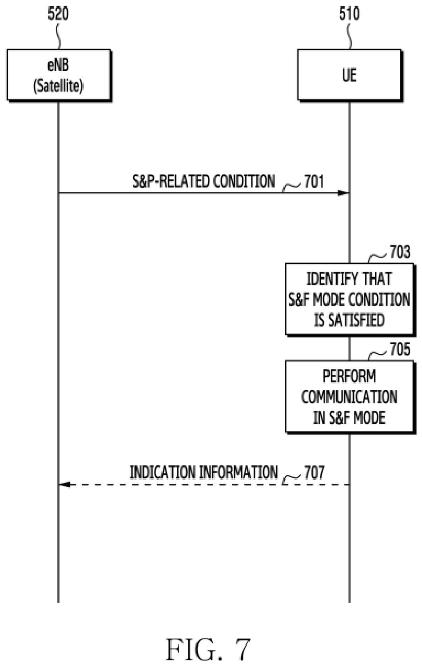

FIG. 7 illustrates an example of signaling for providing S&F condition information. In FIG. 7, procedures for selecting which mode UE (e.g., UE 510) will operate in are described in a case that both an S&F mode and an RT mode are supported. As an example, the satellite 520 may transmit, on a cell provided by the satellite 520, an indicator indicating that the cell supports the S&F mode to the UE 510. Additionally, the satellite 520 may transmit an indicator indicating that the cell supports the RT mode to the UE 510.

Referring to FIG. 7, in operation 701, the satellite 520 may transmit information on an S&F condition to the UE 510. The information on the S&F condition may indicate a trigger condition for the UE 510 to operate in the S&F mode on the cell. According to an embodiment, the information on the S&F condition may be provided through system information (e.g., a master information block (MIB), a system information block (SIB) 31, SIB 32, SIB 33, or SIB x). For example, the satellite 520 may transmit the information on the S&F condition together with an indicator notifying that the S&F mode is supported. For example, the satellite 520 may transmit the information on the S&F condition with an indicator notifying that the RT mode is supported. According to an embodiment, the information on the S&F condition may be provided through an RRC message (e.g., an RRC reconfiguration message, an RRC connection completion message). For example, the satellite 520 may transmit the information on the S&F condition together with the indicator notifying that the S&F mode is supported. For example, the satellite 520 may transmit information on the S&F condition together with the indicator notifying that the RT mode is supported.

According to various embodiments of the present disclosure, the information on the S&F condition may include information on a time (e.g., a timer). For example, the information on the S&F condition may include information on a time at which the S&F mode is started. After the time elapses, the UE 510 may operate in the S&F mode. For example, the information on the S&F condition may include information on a time at which the S&F mode is terminated. After the time elapses, the UE 510 may operate in the RT mode. For example, the information on the S&F condition may include information on a time at which the RT mode is started. After the time elapses, the UE 510 may operate in the RT mode. For example, the information on the S&F condition may include information on a time at which the RT mode is terminated. After the time elapses, the UE 510 may operate in the S&F mode. The information on the time may be indicated through an absolute time (e.g., UTC time) or a resource location (e.g., a hyperframe number, a system frame number, a radio frame number, or a subframe number).

According to various embodiments of the present disclosure, the information on the S&F condition may include a type of a trigger condition and parameters (e.g., an offset, or a threshold) for the trigger condition. The type of the trigger condition may be used to identify a condition for the UE to operate in the S&F mode. The parameters may include a threshold and/or an offset used to determine the condition for the UE to operate in the S&F mode. According to an embodiment, the type of the trigger condition may be related to a data size. In a case that a size of data (i.e., uplink data) to be transmitted by the UE 510 is greater than or equal to the threshold, the UE 510 may operate in the RT mode. In a case that the size of the data (i.e., the uplink data) to be transmitted by the UE 510 is less than the threshold, the UE 510 may operate in the S&F mode. Information on the threshold may be included in the information on the S&F condition. Additionally, the UE 510 may determine the operation mode based on a time operable in the RT mode. As the size of the uplink data to be transmitted is smaller and a time to operate in the RT mode is longer, it may be advantageous for the UE 510 to operate in the S&F mode. Meanwhile, if the time to operate in the RT mode is long, it is rather advantageous for the UE 510 to operate in the RT mode. The information on the S&F condition may include information for indicating the threshold (e.g., directly indicating the threshold or a parameter value for calculating the threshold) and/or information on the time to operate in the RT mode (e.g., directly indicating a time interval to operate in the RT mode or a parameter value for calculating the time to operate in the RT mode). As a non-liming example, the threshold may be determined based on a value provided by the satellite 520 and the time to operate in the RT mode.

According to an embodiment, the type of the trigger condition may be related to a service type. In a case that QCI associated with DRB of the UE 510 is a specified value (e.g., an allowed packet delay budget is greater than a threshold), the UE 510 may operate in the S&F mode. In a case that the QCI associated with the DRB of the UE 510 is not the specified value (e.g., the allowed packet delay budget is less than the threshold), the UE 510 may operate in the RT mode. For example, for a voice service such as QCI=1, a required allowable delay value is 100 ms, which is less than the threshold (e.g., 200 ms), so the UE 510 may operate in the RT mode. For example, for an email service such as QCI=8, the required allowable delay is 300 ms, which is less than the threshold (e.g., 200 ms), so the UE 510 may operate in the S&F mode. For example, the information on the S&F condition may include a service range (e.g., a DRB list, a QoS flow list, an S-NSSAI list, or a QCI list) for operating in the S&F mode. For example, the information on the S&F condition may include information on a threshold of a metric for determining whether to operate in the S&F mode. Additionally, the trigger condition may be related to the service type and the maximum delivery time (e.g., a time to be delivered to the terrestrial station via the next connected feeder link through the satellite 520) provided from the satellite 520. The maximum transmission time may indicate a guaranteed time during which uplink data of the UE 510 may be delivered to the satellite 520. Therefore, UE 510 may determine the metric based on a size of currently pending data, a type of a service (e.g., S-NSSAI, DRB, QoS Flow, or QCI) provided to the UE 510, and requirements (e.g., a packet delay budget, and a packet error loss rate) related to the type. The UE 510 may determine whether to operate in the S&F mode or in the RT mode by comparing the metric with a value corresponding to the maximum delivery time.

As a non-limiting example, the information on the S&F condition may include parameters related to a movement of the satellite 520. The UE 510 may predict the movement of the satellite 520 and operations of the satellite 520 based on the parameters. Based on the prediction result, the UE 510 may determine whether to operate in the S&F mode or in the RT mode.

In operation 703, the UE 510 may identify that the S&F mode condition is satisfied. The UE 510 may identify that the S&F mode condition is satisfied based on the information on the S&F condition. For a determination for each operation of the UE 510, the descriptions of the operation 701 may be referred to.

In operation 705, the UE 510 may perform communication in the S&F mode. The UE 510 may perform the operations according to FIG. 5 based on the S&F mode. For example, the UE 510 may transmit data for the services (e.g., as the non-real-time service, the SMS, or the e-mail service) available in the S&F mode to the satellite 520 or receive it from the satellite 520. On the other hand, the UE 510 may be difficult to perform some services (e.g., the real-time service, the streaming service, the voice call, or the video call) with the satellite 520 in the S&F mode. Meanwhile, classification of these service types is exemplary and should not be interpreted as limiting the embodiments of the present disclosure.

In operation 707, the UE 510 may transmit indication information to the satellite 520. The indication information may indicate, if both the S&F mode and the RT mode are possible, which method among the S&F mode and the RT mode should be performed for data to be provided. According to an embodiment, an RRC message may be used. The RRC message may include the indication information. The RRC message may be a portion of a procedure for inquiring a data transmission method (e.g., transmission in the RT mode or transmission in the S&F mode) of the UE. In the RRC layer, in response to a request message of the satellite 520, the UE 510 may transmit the RRC message including the indication information to the satellite 520. According to an embodiment, a random access procedure may be used. The UE 510 may transmit a random access preamble corresponding to the indication information or an uplink message (e.g., Msg 3, or an RRC connection request message) including the indication information. For example, an ID of the random access preamble and/or a resource (e.g., a RACH occasion) in which the random access preamble is transmitted may indicate a value (e.g., data transmission using the RT mode, or data transmission using the S&F mode) corresponding to the indication information. According to an embodiment, CSI may be used. The indication information may be used as a parameter of the CSI. The parameter of the CSI may indicate a value (e.g., data transmission using the RT mode, data transmission using the S&F mode) corresponding to the indication information. According to an embodiment, a MAC layer message (e.g., MAC CE) may be used. The indication information may be included as a field in the MAC CE. The MAC CE may indicate a value (e.g., data transmission using the RT mode, data transmission using the S&F mode) corresponding to the indication information.

In a case that it is indicated that the S&F (Store and Forward) is sufficient to perform a delivery faster than what is indicated by using the RT (Real-Time) traffic or by forwarding via the Inter-Satellite Link (ISL), it may be required that a network side (e.g., the satellite 520) determines it. In a case that it depends on the RT traffic according to a position of the satellite 520, or in a case that use of a corresponding method is impossible and limited due to a capacity overflow, the satellite 520 is required to indicate it to the UE 510.

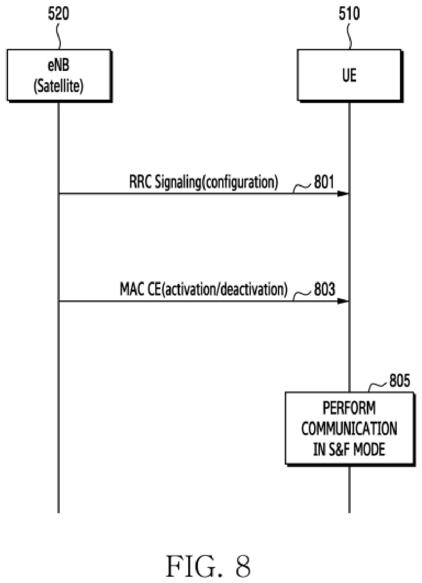

FIG. 8 illustrates an example of signaling for supporting an S&F mode. In FIG. 8, an example of signaling for configuring the S&F mode through signaling of an RRC layer and for activating or deactivating at least a portion of a configuration of the S&F mode through signaling of an MAC layer is illustrated. By activating or deactivating the at least a portion of the configuration of the S&F mode, an RT mode operation or an S&F mode operation of UE 510 may or may not be possible.

Referring to FIG. 8, in operation 801, a satellite 520 may transmit an RRC signaling message to the UE 510. The RRC signaling message may be a system information message or an RRC message broadcasted on an access network. The RRC signaling message according to embodiments of the present disclosure may include S&F mode configuration information. According to embodiments of the present disclosure, the S&F mode configuration information may include information on a time to operate in the S&F mode, information indicating whether the RT mode is supported along with the S&F mode, information on a time to operate in the RT mode, and/or information on a sub-channel. The sub-channel may be a unit for indicating that S&F or the RT is momentarily available, unavailable, or blocked. According to an embodiment, the information on the sub-channel may be information on a plurality of time intervals corresponding to the time to operate in the S&F mode. For example, after the S&F mode of the UE 510 is configured through the RRC signaling message or after receiving an activation instruction after the S&F mode is configured, the UE 510 may operate in the S&F mode. Thereafter, the S&F mode may not be possible during a partial time interval through the instruction of the sub-channel. Thereafter, when the partial time interval passes, the S&F mode may be available again. The time interval may be set to a value (e.g., 10 ms, 20 ms, 40 ms) shorter than a period (e.g., a period (e.g., 80ms) of system information) of the RRC signaling message. As a non-limiting example, in a case that the S&F mode is impossible, the UE 510 may operate in the RT mode. According to an embodiment, information on the sub-channel may indicate a plurality of frequency bands (e.g., sub-bands, and BWPs). For example, after the S&F mode of the UE 510 is configured through the RRC signaling message, the UE 510 may operate in the S&F mode. Thereafter, the S&F mode may not be possible through a control signal (e.g., MAC CE). Herein, frequency bands in which the S&F mode is impossible may be indicated through the control signal. Thereafter, the S&F mode may be set to be available again through a separate control signal (e.g., MAC CE). Activation/deactivation of the S&F mode may be turned on or off in units of frequency bands. As a non-limiting example, in a case that the S&F mode is impossible, the UE 510 may operate in the RT mode.

As a non-limiting example, the S&F mode configuration information may further include a plurality of S&F configurations to be used when operating in the S&F mode and/or an identifier (e.g., configuration ID) for each S&F configuration. For example, the information on the time to operate in the S&F mode, the information indicating whether the RT mode is supported along with the S&F mode, the information on the time to operate in the RT mode, and/or the information on the sub-channel that are described above may be independent for each S&F configuration.

In operation 803, the satellite 520 may transmit MAC CE to the UE 510. According to an embodiment, the MAC CE may be used to activate an operation of the S&F mode. The MAC CE may activate a specific configuration related to the S&F mode among configurations received through the configuration information of the S&F mode. For example, the configuration information of the S&F mode may include information on a sub-channel. As an example, the information on the sub-channel may indicate a plurality of time intervals corresponding to the time to operate in the S&F mode. The MAC CE may indicate a time interval during which the S&F mode is activated. As another example, the information on the sub-channel may indicate a plurality of frequency bands corresponding to the time to operate in the S&F mode. The MAC CE may indicate a frequency band (e.g., a sub-band, or BWP) in which the S&F mode is activated. For example, the configuration information of the S&F mode may include an identifier (e.g., configuration ID) for the plurality of S&F configurations and for each S&F configuration. Each S&F configuration may include whether independent RT is supported, an RT operation time, an S&F mode operation time, a support service type (e.g., DRB list, or QoS flow list), and an adjacent cell list. The MAC CE may indicate an identifier corresponding to an S&F configuration to be activated.

In operation 805, the UE 510 may perform communication in the S&F mode. The UE 510 may perform the operations according to FIG. 5 based on the S&F mode. For example, the UE 510 may transmit data for the services (e.g., as the non-real-time service, the SMS, or the e-mail service) available in the S&F mode to the satellite 520 or receive it from the satellite 520. On the other hand, the UE 510 may be difficult to perform some services (e.g., the real-time service, the streaming service, the voice call, or the video call) with the satellite 520 in the S&F mode. Meanwhile, classification of these service types is exemplary and should not be interpreted as limiting the embodiments of the present disclosure.

In FIG. 8, an example of activating the S&F mode has been described, but embodiments of the present disclosure are not limited thereto. Activation of the S&F mode as well as deactivation of the S&F mode through the MAC CE may be understood as an embodiment of the present disclosure. In the same way as illustrated in the operation 803, the satellite 520 may deactivate the S&F mode for the indicated time interval, deactivate the S&F mode in the indicated frequency band, or deactivate a specific S&F configuration.

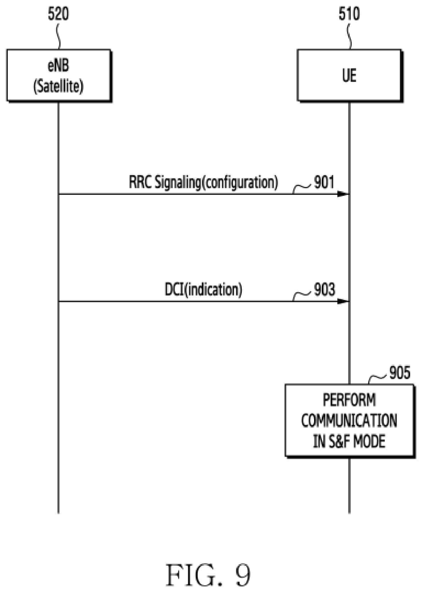

FIG. 9 illustrates an example of signaling for supporting an S&F mode. In FIG. 8, an example of signaling for configuring the S&F mode through signaling of an RRC layer and for activating or deactivating at least a portion of a configuration of the S&F mode through signaling of an MAC layer is illustrated. By triggering at least a portion of a configuration of the S&F mode, an RT mode operation or an S&F mode operation of UE 510 may or may not be possible.

Referring to FIG. 9, in operation 901, a satellite 520 may transmit an RRC signaling message to the UE 510. The satellite 520 may transmit the RRC signaling message to the UE 510. The RRC signaling message may be a system information message (e.g., MIB, SIB1, or SI) or an RRC message broadcasted on an access network. The RRC signaling message according to embodiments of the present disclosure may include S&F mode configuration information. According to embodiments of the present disclosure, the S&F mode configuration information may include information on a time to operate in the S&F mode, information on whether the RT mode is supported along with the S&F mode, information on a sub-channel, and/or information on a mode indicator. The sub-channel may be a unit for indicating that S&F or RT is momentarily available, unavailable, or blocked. According to an embodiment, the information on the sub-channel may be information on a plurality of time intervals corresponding to the time to operate in the S&F mode. For example, after the S&F mode of the UE 510 is configured through the RRC signaling message or after receiving an activation instruction after the S&F mode is configured, the UE 510 may operate in the S&F mode. Thereafter, the S&F mode may not be possible during a partial time interval through the instruction of the sub-channel. Thereafter, when the partial time interval passes, the S&F mode may be available again. According to an embodiment, information on the sub-channel may indicate a plurality of frequency bands (e.g., sub-bands, and BWPs). For example, after the S&F mode of the UE 510 is configured through the RRC signaling message, the UE 510 may operate in the S&F mode. Thereafter, the S&F mode may not be possible through a control signal (e.g., DCI). Herein, frequency bands in which the S&F mode is impossible may be indicated through the control signal. Thereafter, the S&F mode may be set to be available again through a separate control signal (e.g., DCI). Activation/deactivation of the S&F mode may be turned on or off in units of frequency bands. As a non-limiting example, in a case that the S&F mode is impossible, the UE 510 may operate in the RT mode. For the sub-channel, the descriptions of FIG. 8 may be referred to.

The RRC signaling message according to embodiments of the present disclosure may include information regarding a mode indicator. Even if the UE 510 operates in the S&F mode, it may be required to momentarily operate in the RT mode. In this case, a mode conversion instruction to the RT mode is required. Even if the UE 510 operates in the RT mode, it may be required to momentarily operate in the S&F mode. In this case, a mode conversion instruction to the S&F mode is required. Even if the UE 510 operates in the S&F mode, it may be difficult to momentarily operate in the S&F mode. In this case, an indication of unavailability of the S&F mode is required. Even if the UE 510 operates in the RT mode, it may be difficult to momentarily operate in the RT mode. In this case, an indication of unavailability of the S&F mode is required. Referring to the above-described examples, the mode indicator may be used for an indication of availability, an indication of unavailability, and/or a mode conversion. For this indication, the information regarding the mode indicator may include RNTI information for identifying the mode indicator, information for indicating a type of the mode indicator, and/or information indicating data indicated through a value of the mode indicator.

As a non-limiting example, the S&F mode configuration information may further include an identifier (e.g., configuration ID) for a plurality of S&F configurations to be used when operating in the S&F mode and/or for each S&F configuration. For example, the information on the time to operate in the S&F mode, the information indicating whether the RT mode is supported along with the S&F mode, the information on the time to operate in the RT mode, and/or the information on the sub-channel that are described above may be independent for each S&F configuration.

In operation 903, the satellite 520 may transmit downlink control information (DCI) to the UE 510. According to an embodiment, the DCI may be used to trigger an operation of the S&F mode. The DCI may trigger a specific configuration related to the S&F mode among configurations received through the configuration information of the S&F mode. For example, the configuration information of the S&F mode may include information on a sub-channel. As an example, the information on the sub-channel may indicate a plurality of time intervals corresponding to the time to operate in the S&F mode. The DCI may indicate a time interval during which the S&F mode is triggered. As another example, the information on the sub-channel may indicate a plurality of frequency bands corresponding to the time to operate in the S&F mode. The DCI may indicate a frequency band (e.g., a sub-band, or BWP) in which the S&F mode is triggered. For example, the configuration information of the S&F mode may include an identifier (e.g., configuration ID) for the plurality of S&F configurations and for each S&F configuration. Each S&F configuration may include whether independent RT is supported, an RT operation time, an S&F mode operation time, a support service type (e.g., DRB list, or QoS flow list), and an adjacent cell list. The DCI may indicate an identifier corresponding to an S&F configuration to be triggered.

According to another embodiment, the DCI may be used as a mode indicator. For example, the mode indicator may indicate a mode conversion from the S&F mode to the RT mode or from the RT mode to the S&F mode. The mode conversion may be indicated by a toggle method or a setting value method. In addition, for example, the mode indicator may indicate whether the S&F mode is available or unavailable. In addition, for example, the mode indicator may indicate whether the RT mode is available or unavailable. Availability or unavailability may be indicated by the toggle method or the setting value method.

The UE 510 may perform decoding based on the information received from the satellite 520 through the DCI. As an example, separate RNTI for the mode indicator may be used. As another example, the decoding may be performed through RNTI used for communication with the satellite 520. The UE 510 may determine communication in the S&F mode based on the mode indicator obtained through the DCI.

In operation 905, the UE 510 may perform communication in the S&F mode. The UE 510 may perform the operations according to FIG. 5 based on the S&F mode. For example, the UE 510 may transmit data for the services (e.g., as the non-real-time service, the SMS, or the e-mail service) available in the S&F mode to the satellite 520 or receive it from the satellite 520. On the other hand, the UE 510 may be difficult to perform some services (e.g., the real-time service, the streaming service, the voice call, or the video call) with the satellite 520 in the S&F mode. Meanwhile, classification of these service types is exemplary and should not be interpreted as limiting the embodiments of the present disclosure.

In FIG. 9, an example of triggering the S&F mode has been described, but embodiments of the present disclosure are not limited thereto. Not only triggering the S&F mode but also releasing (or ceasing) the S&F mode through the DCI may be understood as an embodiment of the present disclosure. In the same way as illustrated in the operation 903, via the DCI, the satellite 520 may cease the operation of the S&F mode during the indicated time interval, cease the S&F mode in the indicated frequency band, or cease a specific S&F configuration.

In FIG. 9, an example of determining communication in the S&F mode has been described, but embodiments of the present disclosure are not limited thereto. Ceasing of S&F mode and/or triggering of RT mode are also understood as an embodiment of the present disclosure. As an example, the UE 510 receiving the S&F configuration information may operate in the S&F mode. Thereafter, when receiving the DCI with the mode indicator, it may operate in RT mode for a certain period of time (e.g., a fixed value or a value set through RRC signaling) or until there is a separate release instruction.

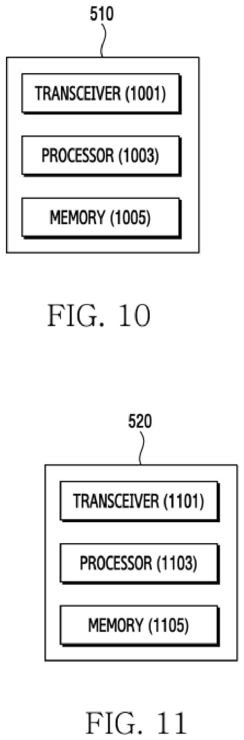

FIG. 10 illustrates an example of components of UE (e.g., UE 510).

Referring to FIG. 10, the UE 510 may include a transceiver 1001, a processor 1003, and memory 1005. The transceiver 1001 performs functions for transmitting and receiving signals through a wireless channel. For example, the transceiver 1001 up-converts a baseband signal into an RF band signal and then transmits it through an antenna, and down-converts the RF band signal received through the antenna into a baseband signal. For example, the transceiver 1001 may include a transmission filter, a reception filter, an amplifier, a mixer, an oscillator, a digital to analog converter (DAC), an analog to digital converter (ADC), and the like.

The transceiver 1001 may include a plurality of transmission/reception paths. Furthermore, the transceiver 1001 may include an antenna unit. The transceiver 1001 may include at least one antenna array configured with a plurality of antenna elements. In terms of hardware, the transceiver 1001 may be configured with digital circuitry and analog circuitry (e.g., a radio frequency integrated circuit (RFIC)). Herein, the digital circuitry and the analog circuitry may be implemented as one package. Also, the transceiver 1001 may include a plurality of RF chains. The transceiver 1001 may perform beamforming. The transceiver 1001 may apply a beamforming weight to a signal to be transmitted/received in order to give a directivity according to a setting of the processor 1003. According to an embodiment, the transceiver 1001 may include a radio frequency (RF) block (or an RF unit). According to an embodiment, the transceiver 1001 may support satellite communication. The UE 510 may transmit a signal to a satellite (e.g., a satellite 520) through the transceiver 1001 or receive a signal from the satellite (e.g., the satellite 520).

The transceiver 1001 may transmit and receive a signal on a radio access network. For example, the transceiver 1001 may receive a downlink signal. The downlink signal may include a synchronization signal (SS), a reference signal (RS) (e.g., a cell-specific reference signal (CRS), or a demodulation (DM)-RS), system information (e.g., MIB, SIB, remaining system information (RMSI), or other system information (OSI)), a configuration message, control information, or downlink data. Also, for example, the transceiver 1001 may transmit an uplink signal. The uplink signal may include a random access-related signal (e.g., a random access preamble (RAP) (or a message 1 (Msg1), a message 3 (Msg3)), a reference signal (e.g., a sounding reference signal (SRS), DM-RS), uplink control information (UCI), (e.g., channel state information (CSI)), a hybrid automatic repeat request (HARQ), a scheduling request (SR), or a power headroom report (PHR). Only the transceiver 1001 is illustrated in FIG. 10, but according to another implementation, the UE 510 may include two or more RF transceivers.

The processor 1003 controls overall operations of the UE 510. The processor 1003 may be referred to as a control unit. For example, the processor 1003 transmits and receives a signal through the transceiver 1001. Furthermore, the processor 1003 writes and reads data to and from the memory 1005. In addition, processor 1003 may perform functions of a protocol stack required by a communication standard. Only the processor 1003 is illustrated in FIG. 10, but according to another implementation, the UE 510 may include two or more processors. The processor 1003 is a set of instructions or code stored in the memory 1005, which is at least temporarily resided in the processor 1003, or a storage area storing the instructions/code, or a portion of circuitry configuring the processor 1003. In addition, processor 1003 may include various modules for performing communication. The processor 1003 may control the UE 510 to perform operations according to embodiments.

The memory 1005 stores data such as a basic program, an application program, and setting information for an operation of the UE 510. The memory 1005 may be referred to as a storage unit. The memory 1005 may be configured with a volatile memory, a non-volatile memory, or a combination of a volatile memory and a non-volatile memory. In addition, the memory 1005 provides data stored according to a request of the processor 1003. According to an embodiment, the memory 1005 may include memory for a condition, a command, or a setting value related to a satellite communication transmission method.

FIG. 11 illustrates an example of components of a satellite (e.g., a satellite 520).

Referring to FIG. 11, the satellite 520 may include at least one transceiver 1101, at least one processor 1103, and at least one memory 1105. Hereinafter, a component is described in a singular, but implementation of a plurality of components or sub-components is not excluded.

The transceiver 1101 performs functions for transmitting and receiving a signal through a wireless channel. For example, the transceiver 1101 performs a conversion function between a baseband signal and a bit stream according to a physical layer specification of a system. For example, when transmitting data, the transceiver 1101 generates complex symbols by encoding and modulating a transmission bit stream. In addition, when receiving data, the transceiver 1101 restores the received bit stream by demodulating and decoding the baseband signal. In addition, the transceiver 1101 up-converts the baseband signal into a radio frequency (RF) band signal and then transmits it through an antenna, and down-converts the RF band signal received through the antenna into a baseband signal. To this end, the transceiver 1101 may include a transmission filter, a reception filter, an amplifier, a mixer, an oscillator, a digital to analog converter (DAC), an analog to digital converter (ADC), and the like. Also, the transceiver 1101 may include a plurality of transmission/reception paths. Furthermore, the transceiver 1101 may include at least one antenna array configured with a plurality of antenna elements. In terms of hardware, the transceiver 1101 may be configured with a digital unit and an analog unit, and the analog unit may be configured with a plurality of sub-units according to an operating power, an operating frequency, and the like. The transceiver 1101 transmits and receives a signal as described above. Accordingly, the transceiver 1101 may be referred to as a 'transmission unit', a 'reception unit', or a 'transmission/reception unit'.

The transceiver 1101 does not exclude a probability of transmitting or receiving a signal not only through the wireless channel but also via a backhaul network, optical communication, the Ethernet, or other wired paths. For example, the transceiver 1101 may support optical communication for signaling of the satellite 520 with another satellite. The satellite 520 may perform optical communication with the other satellite by using a laser beam through the transceiver 1101. For example, wired communication between components in the satellite 520 may be supported. The transceiver 1101 may convert a bit stream transmitted from the satellite 520 to another node, for example, another access node, another base station, an upper node, a core network, and the like, into a physical signal, and convert the physical signal received from the other node into a bit stream.

The transceiver 1101 may support communication between the satellite 520 and the UE 510. The transceiver 1101 may support communication between the satellite 520 and the UE 510 as well as communication between the satellite 520 and a ground segment (e.g., a network entity of an NTN gateway 530, or a core network 550). As a non-limiting example, circuitry for communication with the UE 510 in the transceiver 1101 and circuitry for communication with the ground segment (e.g., the network entity of the NTN gateway 530, or the core network 550) may be distinguished.

The processor 1103 may control overall operations of the satellite 520. For example, the processor 1103 writes and reads data to and from the memory 1105. For example, the processor 1103 transmits and receives a signal through the transceiver 1101. Although FIG. 11 illustrates one processor, embodiments of the present disclosure are not limited thereto. The satellite 520 may include at least one processor (e.g., including a plurality of processors) to perform embodiments of the present disclosure. The processor 1103 may be referred to as a control unit or a control means. According to embodiments of the present disclosure, the processor 1103 may control the satellite 520 to perform at least one of operations or methods according to embodiments of the present disclosure.

The memory 1105 may store data such as a basic program, an application program, and setting information for an operation of the satellite 520. The memory 1105 may store various data used by at least one component (e.g., the transceiver 1101 or the processor 1103). The data may include, for example, input data or output data for software and related instructions. The memory 1105 may be configured with a volatile memory, a non-volatile memory, or a combination of a volatile memory and a non-volatile memory. And the memory 1105 may provide stored data in response to a request from the processor 1103.

In embodiments of the present disclosure, a device of a satellite for providing a non-terrestrial network (NTN) access is provided. The device may comprise memory comprising instructions, at least one processor, and at least one transceiver. The instructions, when executed by the at least one processor, may cause the device to transmit, to a user equipment (UE), a message including information regarding a store and forward (S&F) mode, and perform communication with the UE based on the message. The message may include at least one of information indicating whether a real-time (RT) mode is momentarily supported, indication information for indicating whether an operation mode of a cell is the RT mode or the S&F mode, information on a maximum delivery time for the S&F mode, ephemeris information of the satellite, or footprint information provided by the satellite.

According to an embodiment, the message may include information on the S&F condition. The information on the S&F condition may include at least one of information on a time at which the S&F mode is started, information on a time at which the S&F mode is terminated, information on a time at which the RT mode is started, or information on a time at which the RT mode is terminated.

According to an embodiment, the message may include information on the S&F condition. The information on the S&F condition may include a type of a trigger condition and at least one parameter for the trigger condition. The type of the trigger condition may be used to identify a condition for the UE to operate in the S&F mode. The at least one parameter may include a threshold or an offset used to determine the condition for the UE to operate in the S&F mode.

According to an embodiment, the instructions, when executed by the at least one processor, may cause the device to receive, from the UE, indication information for indicating whether transmission of the UE is the RT mode or the S&F mode. The indication information may be provided through a radio resource control (RRC) message, a medium access control (MAC) control element (CE), a random access preamble of a random access procedure, a message 3 of the random access procedure, and/or channel state information (CSI).

According to an embodiment, the information regarding the S&F mode may include parameters of one or more S&F mode configurations and an identifier indicating each S&F mode of the one or more S&F mode configurations. The instructions, when executed by the at least one processor, may cause the device to transmit, to the UE, a medium access control (MAC) control element (CE) or downlink control information (DCI), including an identifier indicating an S&F mode configuration to be used among the one or more S&F mode configurations.

In embodiments of the present disclosure, a user equipment (UE) for performing a non-terrestrial network (NTN) access is provided. The UE may comprise memory comprising instructions, at least one processor, and at least one transceiver. The instructions, when executed by the at least one processor, may cause the UE to receive, from a satellite configured to perform functions of an evolved node B (eNB), a message including information regarding a store and forward (S&F) mode, and perform communication with the satellite based on the message. The message may include at least one of information indicating whether a real-time (RT) mode is momentarily supported, indication information for indicating whether an operation mode of a cell is the RT mode or the S&F mode, information on a maximum delivery time for the S&F mode, ephemeris information of the satellite, or footprint information provided by the satellite.

According to an embodiment, the message may include information on the S&F condition. The information on the S&F condition may include at least one of information on a time at which the S&F mode is started, information on a time at which the S&F mode is terminated, information on a time at which the RT mode is started, or information on a time at which the RT mode is terminated.

According to an embodiment, the message may include information on the S&F condition. The information on the S&F condition may include a type of a trigger condition and at least one parameter for the trigger condition. The type of the trigger condition may be used to identify a condition for the UE to operate in the S&F mode. The at least one parameter may include a threshold or an offset used to determine the condition for the UE to operate in the S&F mode.

According to an embodiment, the instructions, when executed by the at least one processor, may cause the UE to transmit, to the satellite, indication information for indicating whether transmission of the UE is the RT mode or the S&F mode, and the indication information may be provided through a radio resource control (RRC) message, a medium access control (MAC) control element (CE), a random access preamble of a random access procedure, a message 3 of the random access procedure, and/or channel state information (CSI).

According to an embodiment, the information regarding the S&F mode may include parameters of one or more S&F mode configurations and an identifier indicating each S&F mode of the one or more S&F mode configurations. The instructions, when executed by the at least one processor, may cause the UE to receive, from the satellite, a medium access control (MAC) control element (CE) or downlink control information (DCI), including an identifier indicating an S&F mode configuration to be used among the one or more S&F mode configurations.

In embodiments of the present disclosure, a method performed by a satellite for providing a non-terrestrial network (NTN) access is provided. The method may comprise transmitting, to a user equipment (UE), a message including information regarding a store and forward (S&F) mode, and performing communication with the UE based on the message. The message may include at least one of information indicating whether a real-time (RT) mode is momentarily supported, indication information for indicating whether an operation mode of a cell is the RT mode or the S&F mode, information on a maximum delivery time for the S&F mode, ephemeris information of the satellite, or footprint information provided by the satellite.

According to an embodiment, the message may include information on the S&F condition. The information on the S&F condition may include at least one of information on a time at which the S&F mode is started, information on a time at which the S&F mode is terminated, information on a time at which the RT mode is started, or information on a time at which the RT mode is terminated.

According to an embodiment, the message may include information on the S&F condition. The information on the S&F condition may include a type of a trigger condition and at least one parameter for the trigger condition. The type of the trigger condition may be used to identify a condition for the UE to operate in the S&F mode. The at least one parameter may include a threshold or an offset used to determine the condition for the UE to operate in the S&F mode.

According to an embodiment, the method may comprise receiving, from the UE, indication information for indicating whether transmission of the UE is the RT mode or the S&F mode. The indication information may be provided through a radio resource control (RRC) message, a medium access control (MAC) control element (CE), a random access preamble of a random access procedure, a message 3 of the random access procedure, and/or channel state information (CSI).

According to an embodiment, the information regarding the S&F mode may include parameters of one or more S&F mode configurations and an identifier indicating each S&F mode of the one or more S&F mode configurations. The method may comprise transmitting, to the UE, a medium access control (MAC) control element (CE) or downlink control information (DCI), including an identifier indicating an S&F mode configuration to be used among the one or more S&F mode configurations.

In embodiments of the present disclosure, a method performed by a user equipment (UE) for performing a non-terrestrial network (NTN) access is provided. The method may comprise receiving, from a satellite configured to perform functions of an evolved node B (eNB), a message including information regarding a store and forward (S&F) mode, and performing communication with the satellite based on the message. The message may include at least one of information indicating whether a real-time (RT) mode is momentarily supported, indication information for indicating whether an operation mode of a cell is the RT mode or the S&F mode, information on a maximum delivery time for the S&F mode, ephemeris information of the satellite, or footprint information provided by the satellite.

According to an embodiment, the message may include information on the S&F condition. The information on the S&F condition may include at least one of information on a time at which the S&F mode is started, information on a time at which the S&F mode is terminated, information on a time at which the RT mode is started, or information on a time at which the RT mode is terminated.

According to an embodiment, the message may include information on the S&F condition. The information on the S&F condition may include a type of a trigger condition and at least one parameter for the trigger condition. The type of the trigger condition may be used to identify a condition for the UE to operate in the S&F mode. The at least one parameter may include a threshold or an offset used to determine the condition for the UE to operate in the S&F mode.

According to an embodiment, the method may comprise transmitting, to the satellite, indication information for indicating whether transmission of the UE is the RT mode or the S&F mode. The indication information may be provided through a radio resource control (RRC) message, a medium access control (MAC) control element (CE), a random access preamble of a random access procedure, a message 3 of the random access procedure, and/or channel state information (CSI).

According to an embodiment, the information regarding the S&F mode may include parameters of one or more S&F mode configurations and an identifier indicating each S&F mode of the one or more S&F mode configurations. The method may comprise receiving, from the satellite, a medium access control (MAC) control element (CE) or downlink control information (DCI), including an identifier indicating an S&F mode configuration to be used among the one or more S&F mode configurations.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

Meanwhile, specific embodiments have been described in the detailed description of the present disclosure, and of course, various modifications are possible without departing from the scope of the present disclosure.

## Claims

1. A device of a satellite for providing a non-terrestrial network (NTN) access,
comprising:
memory comprising instructions;
at least one processor, and
at least one transceiver,
wherein the instructions, when executed by the at least one processor, cause the device to:
transmit, to a user equipment (UE), a message including information regarding a store and forward (S&F) mode,
perform communication with the UE based on the message, and
wherein the message includes at least one of information indicating whether a real-time (RT) mode is momentarily supported, indication information for indicating whether an operation mode of a cell is the RT mode or the S&F mode, information on a maximum delivery time for the S&F mode, ephemeris information of the satellite, or footprint information provided by the satellite.

2. The device of claim 1,
wherein the message includes information on a S&F condition, and
wherein the information on the S&F condition includes at least one of information on a time at which the S&F mode is started, information on a time at which the S&F mode is terminated, information on a time at which the RT mode is started, or information on a time at which the RT mode is terminated.

3. The device of claim 1,
wherein the message includes information on a S&F condition,
wherein the information on the S&F condition includes a type of a trigger condition and at least one parameter for the trigger condition,
wherein the type of the trigger condition is used to identify a condition for the UE to operate in the S&F mode, and
wherein the at least one parameter includes a threshold or an offset used to determine the condition for the UE to operate in the S&F mode.

4. The device of claim 1,
wherein the instructions, when executed by the at least one processor, cause the device to:
receive, from the UE, indication information for indicating whether transmission of the UE is the RT mode or the S&F mode, and
wherein the indication information is provided through a radio resource control (RRC) message, a medium access control (MAC) control element (CE), a random access preamble of a random access procedure, a message 3 of the random access procedure, and/or channel state information (CSI).

5. The device of claim 1,
wherein the information regarding the S&F mode includes parameters of one or more S&F mode configurations and an identifier indicating each S&F mode of the one or more S&F mode configurations, and
wherein the instructions, when executed by the at least one processor, cause the device to:
transmit, to the UE, a medium access control (MAC) control element (CE) or downlink control information (DCI), including an identifier indicating an S&F mode configuration to be used among the one or more S&F mode configurations.

6. A user equipment (UE) for performing a non-terrestrial network (NTN) access,
comprising:
memory comprising instructions,
at least one processor, and
at least one transceiver,
wherein the instructions, when executed by the at least one processor, cause the UE to:
receive, from a satellite configured to perform functions of an evolved node B (eNB), a message including information regarding a store and forward (S&F) mode,
perform communication with the satellite based on the message, and
wherein the message includes at least one of information indicating whether a real-time (RT) mode is momentarily supported, indication information for indicating whether an operation mode of a cell is the RT mode or the S&F mode, information on a maximum delivery time for the S&F mode, ephemeris information of the satellite, or footprint information provided by the satellite.

7. The UE of claim 6,
wherein the message includes information on a S&F condition, and
wherein the information on the S&F condition includes at least one of information on a time at which the S&F mode is started, information on a time at which the S&F mode is terminated, information on a time at which the RT mode is started, or information on a time at which the RT mode is terminated.

8. The UE of claim 6,
wherein the message includes information on a S&F condition,
wherein the information on the S&F condition includes a type of a trigger condition and at least one parameter for the trigger condition,
wherein the type of the trigger condition is used to identify a condition for the UE to operate in the S&F mode, and
wherein the at least one parameter includes a threshold or an offset used to determine the condition for the UE to operate in the S&F mode.

9. The UE of claim 6,
wherein the instructions, when executed by the at least one processor, cause the UE to:
transmit, to the satellite, indication information for indicating whether transmission of the UE is the RT mode or the S&F mode, and
wherein the indication information is provided through a radio resource control (RRC) message, a medium access control (MAC) control element (CE), a random access preamble of a random access procedure, a message 3 of the random access procedure, and/or channel state information (CSI).

10. The UE of claim 6,
wherein the information regarding the S&F mode includes parameters of one or more S&F mode configurations and an identifier indicating each S&F mode of the one or more S&F mode configurations, and
wherein the instructions, when executed by the at least one processor, cause the UE to:
receive, from the satellite, a medium access control (MAC) control element (CE) or downlink control information (DCI), including an identifier indicating an S&F mode configuration to be used among the one or more S&F mode configurations.

11. A method performed by a satellite for providing a non-terrestrial network (NTN)
access, comprising:
transmitting, to a user equipment (UE), a message including information regarding a store and forward (S&F) mode;
performing communication with the UE based on the message, and
wherein the message includes at least one of information indicating whether a real-time (RT) mode is momentarily supported, indication information for indicating whether an operation mode of a cell is the RT mode or the S&F mode, information on a maximum delivery time for the S&F mode, ephemeris information of the satellite, or footprint information provided by the satellite.

12. The method of claim 11,
wherein the message includes information on a S&F condition, and
wherein the information on the S&F condition includes at least one of information on a time at which the S&F mode is started, information on a time at which the S&F mode is terminated, information on a time at which the RT mode is started, or information on a time at which the RT mode is terminated.

13. The method of claim 11,
wherein the message includes information on a S&F condition,
wherein the information on the S&F condition includes a type of a trigger condition and at least one parameter for the trigger condition,
wherein the type of the trigger condition is used to identify a condition for the UE to operate in the S&F mode, and
wherein the at least one parameter includes a threshold or an offset used to determine the condition for the UE to operate in the S&F mode.

14. The method of claim 11, further comprising
receiving, from the UE, indication information for indicating whether transmission of the UE is the RT mode or the S&F mode, and
wherein the indication information is provided through a radio resource control (RRC) message, a medium access control (MAC) control element (CE), a random access preamble of a random access procedure, a message 3 of the random access procedure, and/or channel state information (CSI).

15. The method of claim 11,
wherein the information regarding the S&F mode includes parameters of one or more S&F mode configurations and an identifier indicating each S&F mode of the one or more S&F mode configurations, and
wherein the method further comprises transmitting, to the UE, a medium access control (MAC) control element (CE) or downlink control information (DCI), including an identifier indicating an S&F mode configuration to be used among the one or more S&F mode configurations.
